# EUROPÄISCHE PATENTSCHRIFT

(11) **EP 2 757 297 B1**
(45) Veröffentlichungstag und Bekanntmachung des Hinweises auf die Patenterteilung: **05.04.2017**
(21) Anmeldenummer: 13197066.7
(22) Anmeldetag: 13.12.2013
(51) Int. Cl.: F16L 23/036, F16L 37/20, F16B 2/18, B25B 5/12

(54) **Vakuumanordnung und Verwendung einer Verbindungsvorrichtung**
Vacuum arrangement and use of a connecting device
Arrangement de vide et utilisation d'un dispositif de raccord

(30) Priorität: 18.01.2013 DE 102013200765
(43) Veröffentlichungstag der Anmeldung: 23.07.2014
(73) Patentinhaber: PFEIFFER VACUUM GMBH, 35614 Asslar (DE)
(72) Erfinder: Utsch, Helmut, 57080 Siegen (DE)
(74) Vertreter: Manitz, Finsterwald & Partner GbR

(56) Entgegenhaltungen:
- BE-A- 363 267
- DE-A1- 10 233 242
- DE-U1-202008 008 692
- LU-A1- 61 568
- US-A- 1 331 715
- US-A1- 2009 295 155
- US-A1- 2010 299 890
- US-B1- 6 315 278

## Beschreibung

Die Erfindung betrifft eine Vakuumanordnung mit wenigstens zwei Komponenten, die jeweils einen Flansch aufweisen, und wenigstens einer Verbindungsvorrichtung zur Herstellung einer vakuumdichten Flanschverbindung zwischen den zwei Komponenten. Die Erfindung betrifft ferner die Verwendung einer Verbindungsvorrichtung zur Herstellung einer vakuumdichten Flanschverbindung.

Vakuumdichte Verbindungen zwischen Komponenten einer Vakuumanordnung, beispielsweise zwischen einem gasleitenden Rohr und einem Federungskörper oder Federbalg, welcher als Anschluss- oder Ausgleichsstück einer Vakuumverrohrung dienen kann, umfassen typischerweise eine oder mehrere Verbindungsvorrichtungen, mit denen die zu verbindenden Komponenten mechanisch so aneinander fixiert werden, dass zwischen den Komponenten eine vakuumdichte Verbindung geschaffen wird.

Bekannte Verbindungsvorrichtungen sind beispielsweise Klammern, welche zwei Klemmbacken aufweisen, zwischen denen die zu verbindenden Komponenten einklemmbar sind. Die Klemmbacken sind typischerweise durch eine Schraubverbindung miteinander verbunden, über die die Klammer zwischen einer gelösten Stellung, in der die Klammer auf die Flansche aufsetzbar ist, und einer festgezogenen Stellung verstellbar ist, in der die Klammer die beiden Komponenten aneinander fixiert. Eine solche Verbindungsvorrichtung ist beispielsweise aus der US 2009/0295155 A1 bekannt.

Ferner sind Pratzen bekannt, die eine Kralle zur Kopplung mit einer der zu verbindenden Komponenten aufweisen und die mit der anderen Komponente verschraubt werden, um die vakuumdichte Verbindung herzustellen. Nachteilig bei den bekannten Verbindungsvorrichtungen ist, dass diese nur unter Verwendung eines Werkzeugs zum Lösen und Festziehen der Schrauben zwischen der gelösten und der festgezogenen Stellung verstellbar sind, wodurch der für die Herstellung und das Lösen der Verbindung notwendige Zeit- und Arbeitsaufwand erhöht wird. Die Herstellung einer zuverlässigen und sicheren Verbindung erfordert außerdem ein nicht unerhebliches Geschick und eine hohe Sorgfalt des Benutzers.

Aus den Dokumenten DE 20 2008 008 692 U1, US 6,315,278 B1 und US 2010/0299890 A1 sind jeweils Verbindungsvorrichtungen bekannt, die sich über einen schwenkbaren Bedienhebel montieren lassen.

Aufgabe der Erfindung ist es, eine Vakuumanordnung der eingangs genannten Art zu schaffen, mit der auf einfache und schnelle Weise und insbesondere manuell und ohne Werkzeug eine zuverlässige und sichere vakuumdichte Verbindung zwischen zwei Komponenten einer Vakuumanordnung geschaffen werden kann.

Die Aufgabe wird durch eine Vakuumanordnung mit den Merkmalen des Anspruchs 1 gelöst.

Anspruch 13 betrifft die Verwendung einer Verbindungsvorrichtung zur Herstellung einer vakuumdichten Flanschverbindung.

Die Verbindungsvorrichtung dient zur Herstellung einer vakuumdichten Verbindung, insbesondere einer Flanschverbindung, zwischen wenigstens zwei Komponenten einer Vakuumanordnung und umfasst ein erstes Kopplungselement zur Kopplung mit der einen Komponente und ein zweites Kopplungselement zur Kopplung mit der anderen Komponente. Das erste Kopplungselement und das zweite Kopplungselement sind über einen schwenkbaren Bedienhebel miteinander gekoppelt und die Verbindungsvorrichtung ist durch Verschwenken des Bedienhebels aus einer ersten Stellung, in der die Kopplungselemente einen größeren Abstand voneinander aufweisen, in eine zweite Stellung verstellbar, in der die Kopplungselemente einen geringeren Abstand voneinander aufweisen. Die Verstellung über den Bedienhebel kann manuell ohne Verwendung eines Werkzeugs erfolgen, so dass die Herstellung einer vakuumdichten Verbindung mit der Verbindungsvorrichtung erheblich erleichtert ist. Die Verstellung mit dem Bedienhebel erlaubt eine einfache und gleichzeitig äußerst präzise und stabile Verstellung zwischen der ersten und der zweiten Stellung, so dass die vakuumdichte Verbindung äußerst einfach und gleichzeitig sicher, zuverlässig und schnell herstellbar ist.

Die erste Stellung, in der die Kopplungselemente den größeren Abstand aufweisen, kann dabei der gelösten Stellung der Vorrichtung entsprechen, in der die Verbindungsvorrichtung auf die Komponenten aufgesetzt oder von diesen entfernt werden kann, und die zweite Stellung, in der die Kopplungselemente den geringeren Abstand aufweisen, kann der gespannten bzw. angezogenen Stellung der Verbindungsvorrichtung entsprechen, in der die Verbindungsvorrichtung die zwei Komponenten zur Herstellung einer vakuumdichten Verbindung zusammenhält und insbesondere Kontaktflächen der Komponenten dichtend miteinander oder mit einem der mehreren zwischen den Komponenten angeordneten Dichtungselementen zusammenpresst. Die Verbindungsvorrichtung kann ohne Weiteres mehrfach manuell von der ersten Stellung in die zweite Stellung und umgekehrt verstellbar sein, so dass sich die vakuumdichte Schnellverbindung wiederholt herstellen und wieder lösen lässt.

Vorteilhafte Ausführungsformen der Erfindung sind in den Unteransprüchen, der Beschreibung und den Figuren beschrieben.

Bevorzugt sind das erste Kopplungselement und das zweite Kopplungselement durch Verschwenken des Bedienhebels in einer Richtung aufeinander zu bewegbar und/oder drängbar, die bei hergestellter vakuumdichter Verbindung quer und insbesondere im Wesentlichen senkrecht zu einer Kontaktfläche zumindest einer der beiden Komponenten ist, mit der die jeweilige Komponente dichtend an der anderen Komponente oder an einem zwischen den Komponenten angeordneten Dichtungselement anliegt. Die Bewegung der Kopplungselemente kann zumindest abschnittsweise geradlinig in dieser Richtung verlaufen oder einen anderen Verlauf mit einer in diese Richtung weisenden Richtungskomponente aufweisen. Durch Drängen der Kopplungselemente in eine Position, in der diese in Bezug auf die genannte Richtung einen geringeren Abstand voneinander aufweisen, kann ein Anpressdruck auf zwischen den Kopplungselementen angeordnete Komponenten erzeugt werden, welcher quer und insbesondere senkrecht zu der Kontaktfläche einer Komponente gerichtet ist und Kontaktflächen der Komponenten vakuumdichtend gegeneinander presst. Eine Kontaktfläche kann durch eine Stirnfläche eines Flanschs der jeweiligen Komponente gebildet sein und die Richtung, in der die Kopplungselemente aufeinander zu bewegbar sind, kann quer und z.B. im Wesentlichen senkrecht zu der Stirnfläche bzw. Flanschebene der Komponente gerichtet sein.

Die Verbindungsvorrichtung kann als Klammer ausgebildet sein und die beiden Kopplungselemente können als Klemmbacken der Klammer ausgebildet sein, zwischen denen die beiden Komponenten zur Herstellung der vakuumdichten Verbindung einklemmbar bzw. einspannbar sind.

Vorzugsweise ist die Verbindungsvorrichtung zur Herstellung einer vakuumdichten Flanschverbindung ausgebildet, wobei zumindest eine Komponente einen Flansch aufweist, dessen Stirnfläche durch die Verbindungsvorrichtung mit vakuumdichtend an eine Kontaktfläche der anderen Komponente bzw. ein Dichtungselement anpressbar ist. Bei einer Flanschverbindung zwischen zwei Flanschen werden die Stirnflächen der Flansche vorzugsweise vakuumdichtend aneinander oder an eines oder mehrere zwischen den Flanschen angeordnete Dichtungselemente gepresst. Die Verbindungsvorrichtung kann als Klammer mit zwei Kopplungselementen bzw. Klemmbacken ausgebildet sein, zwischen denen die beiden Flansche zur Herstellung der vakuumdichten Verbindung einklemmbar sind. Die beiden Flansche können im Wesentlichen komplementär ausgebildet sein und/oder im Wesentlichen deckungsgleiche Stirnflächen besitzen. Die Flansche können bei hergestellter Verbindung konzentrisch zueinander sein und die Stirnflächen der Flansche können einander im Wesentlichen deckungsgleich und frontal gegenüber liegen. Zwischen den Flanschen kann, ggf. zusätzlich zu einem Dichtungselement, ein Einlegering und/oder Zentrierring angeordnet sein, welcher z.B. eine konzentrische Anordnung der Flansche sicherstellt.

Ein Flansch kann beispielsweise ein Kleinflansch, insbesondere nach der DIN 28403, oder ein ISO-K-Flansch oder Klammerflansch, insbesondere nach der DIN 28404, sein. Ein ISO-K- bzw. Klammerflansch kann eine Ausnehmung umfassen, die auf der Rückseite des Flansches vorgesehen ist und quer und insbesondere senkrecht zu der Flanschebene des Flansches einspringt. Die Verbindungsvorrichtung kann insbesondere zur Herstellung einer Flanschverbindung zwischen einem ISO-K-Flansch der einen Komponente und einem ISO-K-Flansch der anderen Komponente ausgebildet sein, die jeweils wie vorstehend ausgebildet sein können.

Ein Kopplungselement der Verbindungsvorrichtung ist vorzugsweise zur Kopplung mit dem Flansch einer Komponente ausgebildet. Gemäß einer vorteilhaften Ausführungsform weist das erste Kopplungselement und/oder das zweite Kopplungselement einen Kopplungsabschnitt auf, der zur Anlage an einer Rückseite eines Flansches einer Komponente und zur Ausübung einer quer und insbesondere senkrecht zu der Flanschebene der Komponente gerichteten Klemmkraft auf die Rückseite des Flansches der Komponente ausgebildet ist. Dadurch kann der Flansch an einen entsprechenden Verbindungsabschnitt der anderen Komponente, insbesondere deren Flansch, oder ein Dichtungselement, gepresst und dadurch eine vakuumdichte Verbindung hergestellt werden.

Vorzugsweise weist das erste Kopplungselement und/oder das zweite Kopplungselement einen Vorsprung auf, der in der Richtung vorsteht, in der das jeweilige Kopplungselement zu dem anderen Kopplungselement hin bewegbar ist. Die Richtung, in die der Vorsprung vorsteht, kann dabei im Wesentlichen parallel zu der Bewegungsrichtung sein oder zumindest eine zu der Bewegungsrichtung parallele Richtungskomponente aufweisen. Der Vorsprung ist bevorzugt zum Eingreifen in eine Ausnehmung einer der Komponenten ausgebildet, die insbesondere auf einer von der Stirnfläche eines Flansches abgewandten Rückseite des Flansches der jeweiligen Komponente vorgesehen ist und quer und insbesondere senkrecht zu der Flanschebene des Flansches einspringt. Durch den Vorsprung und dessen Eingreifen in die Ausnehmung kann eine quer und insbesondere senkrecht zu der Bewegungsrichtung der Kopplungselemente wirksame Hinterschneidung zwischen dem Kopplungselement und dem Flansch geschaffen werden, wodurch die Verbindungsvorrichtung wirksam an dem Flansch fixiert wird.

Zur Herstellung der vakuumdichten Verbindung werden die Kopplungselemente vorzugsweise durch Verstellen des Bedienhebels entgegen einem von den zwischen den Kopplungselementen angeordneten Komponenten ausgeübten Gegenkräftepaar aufeinander zu bewegt, so dass die Komponenten zwischen den Kopplungselementen eingeklemmt bzw. eingespannt und gegeneinander gepresst werden. Um zu verhindern, dass sich die Verbindung nach dem Loslassen des Bedienhebels wieder löst, ist die Verbindungsvorrichtung vorzugsweise in der zweiten Stellung, insbesondere selbsttätig, so arretierbar, dass eine Bewegung der Kopplungselemente in die weiter voneinander beabstandete Stellung verhindert wird, wenn ein äußeres Kräftepaar auf die Kopplungselemente einwirkt, das die Kopplungselemente in Richtung ihrer weiter voneinander beabstandeten Stellung drängt, so dass die Klemm- bzw. Spannwirkung und damit die vakuumdichte Verbindung aufrechterhalten werden.

Gemäß einer vorteilhaften Ausführungsform ist die Verbindungsvorrichtung so ausgebildet, dass bei dem Verschwenken des Bedienhebels zum Verbringen der Verbindungsvorrichtung aus der ersten Stellung in die zweite Stellung ein Totpunkt überschritten wird, bei dessen Überschreiten sich die Verschwenkrichtung umkehrt, in die der Bedienhebel gedrängt wird, wenn auf die beiden Kopplungselemente ein äußeres Kräftepaar einwirkt, das die Kopplungselemente in Richtung ihrer weiter voneinander beabstandeten Stellung drängt. Der Bedienhebel kann z.B. beidseits des Totpunkts jeweils in die von dem Totpunkt weg gerichtete Verschwenkrichtung gedrängt werden.

Diese Ausgestaltung ermöglicht eine besonders wirksame und einfach zu bewerkstelligende selbsttätige Arretierbarkeit in der zweiten Stellung. Beispielsweise kann ein Anschlag vorgesehen sein, welcher in der zweiten Stellung der Verbindungsvorrichtung ein von dem Totpunkt weg gerichtetes Verschwenken des Bedienhebels blockiert. Ein der Klemmwirkung der Verbindungsvorrichtung entgegen gerichtetes und von außen auf die Kopplungselemente einwirkendes Gegenkräftepaar führt dann dazu, dass der Bedienhebel von dem Totpunkt weg gegen den Anschlag gedrängt wird, so dass eine selbstverstärkende und somit äußerst sichere und effektive Arretierung der Verbindungsvorrichtung in der durch den Anschlag definierten zweiten Stellung erreicht wird. Der Anschlag kann durch einen Bestandteil der Verbindungsvorrichtung, beispielsweise einen Abschnitt eines Kopplungselements, gebildet sein und kann direkt auf den Bedienhebel oder ein antriebswirksam damit gekoppeltes Element wirken. Analog zu der Umkehrung der Verschwenkrichtung des Bedienhebels bei einem äußeren auf die Kopplungselemente einwirkenden Kräftepaar kehrt sich an dem Totpunkt vorzugsweise auch die Richtung um, in der die Kopplungselemente bei einem Verschwenken des Bedienhebels in eine vorgegebenen Verschwenkrichtung bewegt bzw. gedrängt werden. Bei dem Verschwenken des Bedienhebels aus der ersten Stellung in die zweite Stellung können die Kopplungselemente dementsprechend zunächst aufeinander zu und nach dem Überschreiten des Totpunkts voneinander weg bewegt bzw. gedrängt werden, so dass in dem Totpunkt der minimale Abstand der Kopplungselemente erreicht wird. Die zweite Stellung der Verbindungsvorrichtung kann relativ nahe an dem Totpunkt gelegen sein, so dass der Abstand der Kopplungselemente in der zweiten Stellung annähernd dem Abstand der Kopplungselemente in dem Totpunkt entspricht.

Erfindungsgemäß sind die Kopplungselemente durch Verschwenken des Bedienhebels entlang einer zumindest näherungsweise geradlinigen Bewegungsbahn aufeinander zu bewegbar, wobei die Orientierung der Kopplungselemente vorzugsweise im Wesentlichen gleich bleibt. Erfindungsgemäß ist eine Führung für die zwei Kopplungselemente vorgesehen. Mit einer Führung können die zwei Kopplungselemente zwischen der ersten und der zweiten Stellung auf einer vordefinierten Bewegungsbahn relativ zueinander geführt sein, so dass eine genau definierte Relativbewegung der Kopplungselemente erreicht wird. Die Kopplungselemente sind mit der Führung erfindungsgemäß entlang einer zumindest näherungsweise geradlinigen Bewegungsbahn und insbesondere bei im Wesentlichen gleich bleibender Orientierung relativ zueinander geführt. Die Führung kann dazu ausgebildet sein, quer zu der durch die Führung vorgegebenen Bewegungsrichtung auf die Kopplungselemente einwirkende Kräfte aufzunehmen und dadurch die Stabilität der mit der Verbindungsvorrichtung herstellbaren vakuumdichten Verbindung zu verbessern.

Die Führung ist vorzugsweise unabhängig von dem den Bedienhebel umfassenden Antriebsmechanismus zur Verstellung der Kopplungselemente realisiert. Erfindungsgemäß weist die Führung einen Führungsabschnitt auf, welcher zumindest teilweise in einer entlang der Bewegungsbahn verlaufenden Aussparung eines Kopplungselements angeordnet ist und welcher mit dem anderen Kopplungselement fest verbunden ist oder zumindest teilweise in einer Aussparung des anderen Kopplungselements angeordnet ist. Dadurch wird sowohl eine zuverlässige Führung als auch eine wirksame und belastbare Aufnahme von quer zur Bewegungsrichtung auf die Kopplungselemente einwirkenden Kräften erreicht.

Gemäß einer vorteilhaften Ausführungsform ist ein Kniehebelspannmechanismus für das erste Kopplungselement und das zweite Kopplungselement vorgesehen, welcher den Bedienhebel umfasst und mit dem Bedienhebel betätigbar ist, um die Verbindungsvorrichtung von der ersten Stellung in die zweite Stellung zu verstellen. Ein solcher Mechanismus eignet sich besonders zur Erzeugung einer Spann- bzw. Klemmkraft zwischen den beiden Kopplungselementen. Der Bedienhebel stellt vorzugsweise einen Kniehebelarm des Mechanismus dar, mit dem die Kopplungselemente gegen ein die Kopplungselemente auseinander drängendes Gegenkräftepaar zueinander hin gezogen werden können. Der Kniehebelspannmechanismus erlaubt die Erzielung einer hohen Spann- bzw. Klemmkraft bei einfacher und leichter Betätigung und stellt zudem einen äußerst präzisen, robusten, verschleißarmen und zuverlässigen Mechanismus dar.

Bevorzugt ist zumindest das erste Kopplungselement und vorzugsweise ebenfalls das zweite Kopplungselement mit dem Bedienhebel jeweils drehbar gekoppelt. Das zweite Kopplungselement kann dabei prinzipiell direkt drehbar mit dem Bedienhebel gekoppelt sein. Es kann auch ein Übertragungselement zur antriebswirksamen Kopplung des zweiten Kopplungselements mit dem Bedienhebel vorgesehen sein, wobei das Übertragungselement mit dem Bedienhebel drehbar gekoppelt ist und mit dem zweiten Kopplungselement, vorzugsweise ebenfalls drehbar, gekoppelt ist. Die Anlenkung des Übertragungselements an dem zweiten Kopplungselement bzw. die entsprechende Drehachse ist dabei von der Anlenkung des Übertragungselements an dem Bedienhebel bzw. der entsprechenden Drehachse beabstandet.

Vorzugsweise ist das erste Kopplungselement um eine erste Drehachse drehbar mit dem Bedienhebel gekoppelt und das zweite Kopplungselement bzw. das damit antriebswirksam gekoppelte Übertragungselement ist um eine zweite Drehachse drehbar mit dem Bedienhebel gekoppelt, wobei die erste Drehachse und die zweite Drehachse bzw. die entsprechenden Anlenkungen voneinander beabstandet und die Drehachsen vorzugsweise im Wesentlichen parallel zueinander sind, so dass eine Hebelwirkung zwischen den Drehachsen erreicht wird. Der Abstand eines äußeren Endes des Bedienhebels von der ersten Drehachse bzw. der entsprechenden Anlenkung kann dabei zumindest das 1,5-fache des Abstands der zweiten Drehachse von der ersten Drehachse bzw. zwischen den entsprechenden Anlenkungen betragen, wodurch ein verlängerter Hebelarm und eine leichte Betätigung der Vorrichtung gewährleistet werden.

Das Übertragungselement kann den zweiten Kniehebelarm eines den Bedienhebel umfassenden Kniehebelspannmechanismus darstellen. Der Einsatz des Übertragungselements hat ferner den Vorteil, dass eine gewünschte relative Positionierung und Ausrichtung des ersten und zweiten Kopplungselements in der ersten und zweiten Stellung und dazwischen sichergestellt werden kann, insbesondere wenn eine wie vorstehend beschriebene Führung für die Kopplungselemente vorgesehen ist.

Eine vorteilhafte Weiterbildung sieht vor, dass das erste Kopplungselement mit dem Bedienhebel um eine erste Drehachse drehbar gekoppelt ist, das Übertragungselement mit dem Bedienhebel um eine zweite Drehachse drehbar gekoppelt ist und das Übertragungselement mit dem zweiten Kopplungselement um eine dritte Drehachse drehbar gekoppelt ist. Die erste Drehachse, die zweite Drehachse und die dritte Drehachse sind dabei vorzugsweise zumindest näherungsweise parallel zueinander. Wie nachstehend beschrieben eignet sich diese Ausführungsform besonders zur Realisierung einer Verbindungsvorrichtung, bei deren Verbringen in die zweite Stellung ein Totpunkt überschritten wird. Die drehbaren Kopplungen können dabei jeweils so ausgebildet sein, dass eine Drehung nur um die jeweilige Drehachse zugelassen wird und eine Drehung um eine quer dazu orientierte Drehachse verhindert wird, wodurch die Stabilität erhöht wird. Die Kopplung kann jeweils so ausgebildet sein, dass eine Verschiebung der gekoppelten Bestandteile zumindest quer zu der Drehachse verhindert wird.

Gemäß einer Ausführungsform wird bei dem Verschwenken des Bedienhebels zum Verstellen der Verbindungsvorrichtung aus der ersten Stellung in die zweite Stellung ein Totpunkt überschritten, an dem die erste Drehachse, die zweite Drehachse und die dritte Drehachse zumindest näherungsweise auf einer Geraden liegen, wobei die zweite Drehachse ein Ende der Geraden bildet und die erste Drehachse insbesondere zwischen der zweiten und dritten Drehachse liegt. Die Gerade ist dabei vorzugsweise zumindest näherungsweise parallel zu der Richtung orientiert, in der die Kopplungselemente beim Verstellen der Verbindungsvorrichtung bewegt werden. In der Totpunktstellung erfolgt bei einer Belastung der Kopplungselemente durch eine äußere, parallel zur Bewegungsrichtung der Kopplungselemente orientierte Kraft vorzugsweise kein Verschwenken des Bedienhebels in eine definierte Richtung, sondern der Bedienhebel und das Übertragungselement sind in einem labilen Gleichgewicht gehalten.

Das Überschreiten des Totpunkts hat den Effekt, dass sich die Schwenkrichtung umkehrt, in die der Bedienhebel durch ein auf die Kopplungselemente einwirkendes Kräftepaar gedrängt wird, das die Kopplungselemente in ihre voneinander beabstandete Stellung drängt. Ein Anschlag, der ein entsprechendes, insbesondere von dem Totpunkt weg gerichtetes, Verschwenken des Bedienhebels in der zweiten Stellung verhindert, kann vorgesehen sein, um eine Arretierung in der zweiten Stellung zu bewirken.

Gemäß einer vorteilhaften Ausführungsform ist zumindest ein elastisches Element, insbesondere ein Federelement, vorgesehen, welches dazu ausgebildet ist, in der zweiten Stellung der Verbindungsvorrichtung einer Bewegung der Kopplungselemente in Richtung ihrer weiter voneinander beabstandeten Position durch eine elastische Rückstellkraft entgegen zu wirken. Das elastische Element dient vorzugsweise dazu, die Kopplungselemente in der zweiten Stellung bei hergestellter vakuumdichter Verbindung mit der erforderlichen Klemmkraft zu beaufschlagen. Durch die Verwendung des elastischen Elements kann eine genau einstellbare Klemmkraft erreicht werden. Ferner kann das elastische Element einer Lockerung der hergestellten Verbindung entgegen wirken. Beispielsweise kann das elastische Element dazu ausgebildet sein, bei einer nachträglichen Annäherung der verbundenen Komponenten, beispielsweise infolge eines Vakuumziehens, die Kopplungselemente durch seine elastische Rückstellkraft entsprechend aufeinander zu zu bewegen und diese daraufhin weiter zueinander hin zu drängen, so dass die Kopplungselemente der Relativbewegung der verbundenen Komponenten folgen und daraufhin unverändert eine ausreichende Klemmkraft auf diese ausüben.

Das wenigstens eine elastische Element kann als Teil des zwischen dem Bedienhebel und den Kopplungselementen angeordneten und zum Verstellen der Kopplungselemente ausgebildeten Antriebsmechanismus ausgebildet sein, so dass eine auf den Bedienhebel ausgeübte Kraft des Bedienhebels über das elastische Element auf die Kopplungselemente übertragen wird und umgekehrt. Das Verschwenken des Bedienhebels zur Verstellung der Vorrichtung von der ersten in die zweite Stellung führt dann vorzugsweise zu einer entsprechenden Bewegung der Kopplungselemente, solange die Vorrichtung nicht belastet ist, d.h. solange keine äußere Gegenkraft auf die Kopplungselemente einwirkt. Wird die Vorrichtung belastet, d.h. wirkt eine äußere Gegenkraft auf die Kopplungselemente ein, welche der freien Bewegung der Kopplungselemente entgegen gerichtet ist, z.B. wenn die Kopplungselemente an den zu verbindenden Komponenten anschlagen, führt das Verschwenken des Bedienhebels vorzugsweise zu einer elastischen Verformung des elastischen Elements. Die dadurch hervorgerufene elastische Rückstellkraft des elastischen Elements drängt die Kopplungselemente in Richtung ihrer freien Bewegung, wodurch vorzugsweise eine auf die zwischen den Kopplungselementen angeordneten Komponenten ausgeübte Klemmkraft erzeugt wird.

Zwischen dem Bedienhebel und den Kopplungselementen liegt bei dieser Ausgestaltung keine strenge Zwangsführung vor. Stattdessen wird ein weiteres Verschwenken des Bedienhebels auch dann ermöglicht, wenn die Kopplungselemente bereits an den zu verbindenden Komponenten anschlagen und führt dann bevorzugt zu einem Spannen des elastischen Elements. Dadurch lässt sich im Wesentlichen unabhängig von geringen Abweichungen der Dimensionierung und relativen Positionierung der zu verbindenden Komponenten bzw. dazwischen angeordneten Dichtungselementen sicher und zuverlässig eine definierte, auf die Komponenten einwirkende Spann- bzw. Klemmkraft und somit eine sichere Verbindung gewährleisten. Der Bedienhebel kann unabhängig von derartigen Variationen in die zweite Stellung verschwenkt werden, welche beispielsweise jenseits eines Totpunkts der Vorrichtung angeordnet sein kann und in der z.B. eine durch einen Anschlag realisierte Arretierung der Vorrichtung gewährleistet sein kann.

Eine beispielhafte Ausführungsform, die in Zusammenhang mit der Figurenbeschreibung näher erläutert ist, sieht vor, dass das Übertragungselement verschiebbar an einem Lagerelement gelagert ist, welches drehbar mit dem Bedienhebel verbunden ist. Zwischen dem Übertragungselement und dem Bedienhebel ist folglich eine drehbare und gleichzeitig verschiebbare Kopplung vorgesehen. Beispielsweise kann das Übertragungselement sich dazu durch eine durchgehende Öffnung des Lagerelements hindurch erstrecken. Zwischen dem Übertragungselement und dem Lagerelement ist vorzugsweise zumindest ein elastisches Element angeordnet, das dazu ausgebildet ist, einer Verschiebung des Übertragungselements in einer Richtung entgegenzuwirken, welche einer Bewegung der Kopplungselemente voneinander weg entspricht.

Das elastische Element gewährleistet, dass in der zweiten Stellung eine definierte Spannkraft auf die zu verbindenden Komponenten ausgeübt wird. Konkret können als elastische Elemente zumindest zwei Tellerfedern vorgesehen sein, welche eine Öffnung aufweisen, durch die sich das Übertragungselement hindurch erstreckt, wobei die Tellerfedern zwischen dem Lagerelement und einem Anschlag des Übertragungselements angeordnet und insbesondere eingespannt sind.

Gemäß einer vorteilhaften Ausführungsform ist eine Einstellvorrichtung zur Einstellung einer elastischen Rückstellkraft vorgesehen, welche von dem elastischen Element in einer bestimmten Stellung der Verbindungsvorrichtung ausgeübt wird. Dadurch lässt sich die für das zum Verschwenken des Bedienhebels erforderliche Kraft und die in der zweiten Stellung der Verbindungsvorrichtung auf die zu verbindenden Komponenten ausgeübte Kraft einstellen. Die Einstellvorrichtung kann zum Beispiel einen verstellbaren Anschlag für das elastische Element aufweisen.

Gemäß einer vorteilhaften Ausführungsform ist eine Sicherungseinrichtung vorgesehen, welche in der zweiten Stellung aktivierbar ist, wobei die aktivierte Sicherungseinrichtung einem Verstellen der Verbindungsvorrichtung in die erste Stellung entgegenwirkt. Die Sicherungseinrichtung kann unabhängig von den Kopplungselementen ein Verschwenken des Bedienhebels in Richtung der ersten Stellung verhindern bzw. hemmen. Dadurch kann ein unbeabsichtigtes Lösen der vakuumdichten Verbindung noch wirksamer vermieden werden.

Die Sicherungseinrichtung kann so ausgebildet sein, dass sie bei dem Verstellen der Verbindungsvorrichtung in die zweite Stellung automatisch aktiviert wird. Beispielsweise kann die Sicherungseinrichtung ein Rastelement umfassen, welches bei dem Verstellen der Verbindungsvorrichtung in die zweite Stellung einrastet. Beispielsweise kann das Rastelement eine Verrastung zwischen dem Bedienhebel und einem zwischen dem Bedienhebel und dem zweiten Kopplungselement angeordneten Übertragungselement gewährleisten, welche den Bedienhebel und das Übertragungselement in einer gegenseitigen Winkelstellung fixiert und ein Verschwenken des Bedienhebels in die erste Stellung verhindert bzw. hemmt.

Vorzugsweise ist die Sicherungseinrichtung zwischen dem Bedienhebel und einem den Bedienhebel mit einem der Kopplungselemente antriebswirksam koppelnden Übertragungselement wirksam. Dadurch lässt sich ein unbeabsichtigtes Verschwenken besonders wirksam verhindern. Insbesondere kann die die Sicherungseinrichtung im Bereich eines Endes des Bedienhebels wirksam sein, welches von einer Drehachse abgewandt ist, um die der Bedienhebel schwenkbar an einem der Kopplungselemente gelagert ist, so dass eine besonders hohe Hebelwirkung und somit hohe Zuverlässigkeit der Verschwenksicherung bewirkt wird.

Bei den wenigstens zwei Komponenten kann es sich prinzipiell um beliebige Bauteile handeln, die zur zumindest teilweisen Begrenzung eines vakuumdichten Volumens ausgebildet sind und die einen Anschluss bzw. Flansch zur gasleitenden Verbindung mit dem Volumen einer weiteren Komponente aufweisen. Beispielsweise kann es sich bei einer Komponente um ein Rohr bzw. ein Teil einer Vakuumverrohrung handeln und bei der anderen Komponente um einen Federbalg. Ebenso kann es sich bei einer Komponente um eine Vakuumpumpe handeln. Die Verbindungsvorrichtungen bewirken vorzugsweise eine lösbare vakuumdichte Klemmverbindung zwischen den Komponenten, welche auf dem vakuumdichtenden Aneinanderpressen von Kontaktflächen zwischen den Komponenten basiert und insbesondere einen geschlossenen ringförmigen Umlauf um das durch die Vakuumanordnung begrenzte innere Volumen bildet. Nachfolgend wird die vorliegende Erfindung beispielhaft anhand vorteilhafter Ausführungsformen unter Bezugnahme auf die beigefügten Figuren beschrieben. Es zeigen:
- Fig. 1: eine Verbindungsvorrichtung gemäß einer Ausführungsform der Erfindung in einer perspektivischen Darstellung;
- Fig. 2 und 3: die in Fig. 1 gezeigte Verbindungsvorrichtung im Längsschnitt in einer ersten Stellung (Fig. 2) und in einer zweiten Stellung (Fig. 3);
- Fig. 4: die in Fig. 1 bis 3 gezeigte Verbindungsvorrichtung in Draufsicht;
- Fig. 5: die in Fig. 1 bis 4 gezeigte Verbindungsvorrichtung in einer entlang der Linie I-I von Fig. 4 geschnitten Darstellung;
- Fig. 6: die in Fig. 1 bis 5 gezeigte Verbindungsvorrichtung in einer entlang der Linie II-II von Fig. 4 geschnittenen Darstellung;
- Fig. 7: den Ausschnitt A von Fig. 3 in einer vergrößerten Darstellung;
- Fig. 8: eine Verbindungsvorrichtung gemäß einer weiteren Ausführungsform der Erfindung in einer perspektivischen Darstellung;
- Fig. 9 und 10: eine Vakuumanordnung gemäß einer Ausführungsform der Erfindung mit der in Fig. 8 gezeigten Verbindungsvorrichtung im Längsschnitt in einer ersten Stellung (Fig. 9) und in einer zweiten Stellung (Fig. 10);
- Fig. 11: eine vergrößerte Darstellung des Ausschnitts A von Fig. 10;
- Fig. 12: die in Fig. 8 bis 11 gezeigte Verbindungsvorrichtung in einer entlang der Linie III-III von Fig. 13 geschnittenen Darstellung;
- Fig. 13: die in Fig. 8 bis 12 gezeigte Verbindungsvorrichtung in Draufsicht;
- Fig. 14: die in Fig. 8 bis 13 gezeigte Verbindungsvorrichtung in einer entlang der Linie I-I von Fig. 13 geschnittenen Darstellung;
- Fig. 15: die in Fig. 8 bis 14 gezeigte Verbindungsvorrichtung in einer entlang der Linie II-II von Fig. 13 geschnittenen Darstellung;
- Fig. 16: eine Vakuumanordnung gemäß einer Ausführungsform der Erfindung in perspektivischer Ansicht; und
- Fig. 17: die in Fig. 16 gezeigte Vakuumanordnung in einer Seitenansicht.

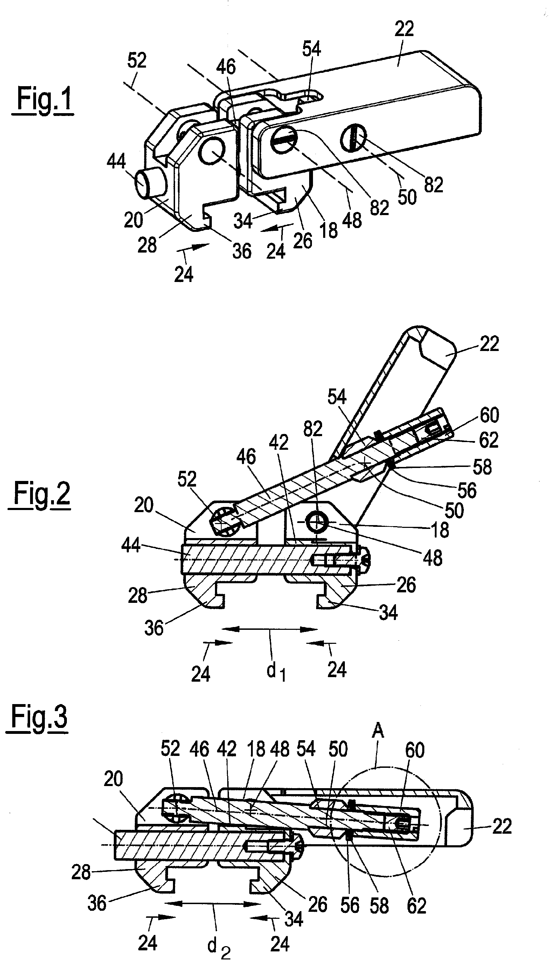

Fig. 1 bis 7 zeigen eine Verbindungsvorrichtung gemäß einer ersten Ausführungsform der Erfindung. Die Verbindungsvorrichtung ist als Klammer ausgebildet, welche zur Herstellung einer lösbaren vakuumdichten Flanschverbindung zwischen zwei Komponenten geeignet ist, die jeweils einen Klammer- bzw. ISO-K-Flansch aufweisen.

Fig. 1 zeigt die Vorrichtung in perspektivischer Darstellung. Die Vorrichtung umfasst ein erstes Kopplungselement 18 zur Kopplung mit dem Flansch einer ersten Komponente und ein zweites Kopplungselement 20 zur Kopplung mit dem Flansch einer zweiten Komponente. Die Kopplungselemente 18, 20 weisen jeweils einen Kopplungsabschnitt 26, 28 mit einem Vorsprung 34, 36 zur Kopplung mit dem jeweiligen Flansch auf. Die Kopplungselemente 18, 20 sind über ein zylinderbolzenförmiges Führungselement 44 parallel zu den Pfeilen 24 längsverschiebbar zueinander geführt. Das Führungselement 44 ist fest mit dem Kopplungselement 18 verbunden und erstreckt sich durch eine zylinderförmige Öffnung des Kopplungselements 20 hindurch (vgl. auch Fig. 2).

Die Verbindungsvorrichtung ist über einen Bedienhebel 22 handbetätigt zwischen einer ersten Stellung und einer zweiten Stellung verstellbar. Dazu ist der Bedienhebel 22 um eine Drehachse 48 drehbar mit dem Kopplungselement 18 verbunden und ein Übertragungselement 46 ist um eine Drehachse 50 drehbar mit dem Bedienhebel 22 und um eine Drehachse 52 drehbar mit dem Kopplungselement 20 verbunden, wobei die Drehachsen 48, 50, 52 parallel zueinander sind. Der Bedienhebel 22 und das Übertragungselement 46 bilden einen Kniehebelspannmechanismus für die Kopplungselemente 18, 20, mit dem auf die Kopplungselemente 18, 20 zur Herstellung der vakuumdichten Verbindung so eingewirkt werden kann, dass sich diese bei unbelasteter Verbindungsvorrichtung in Richtung der Pfeile 24 aufeinander zu bewegen bzw. bei mit den zu verbindenden Komponenten gekoppelter Verbindungsvorrichtung eine in dieser Richtung wirkende Spannkraft auf die zu verbindenden Komponenten ausüben. Die Funktionsweise der Vorrichtung ist nachfolgend unter Bezugnahme auf Fig. 2 und 3 näher erläutert.

Fig. 2 zeigt die Vorrichtung in einer ersten Stellung im Längsschnitt. Der Bedienhebel ist in dieser Stellung gegenüber der Verbindungslinie zwischen den Drehachsen 48, 52 um einen Winkel von etwa 60° verschwenkt. Die durch den Bedienhebel 22 und das Übertragungselement 46 gebildete Kniehebelschere ist in dieser Stellung geöffnet, das heißt das durch die Drehachsen 48, 50, 52 gebildete Dreieck weist bei der Drehachse 50 einen Öffnungswinkel von vorliegend etwa 30° auf, was einem größeren Abstand zwischen den Drehachsen 48, 52 und folglich einem größeren Abstand d₁ der Kopplungselemente 18, 20 voneinander entspricht, wobei der Abstand d₁ durch die lichte Weite zwischen den Kopplungsabschnitten 26, 28 der Kopplungselemente 18, 20 gegeben ist.

Ausgehend von der in Fig. 2 gezeigten ersten Stellung ist die Verbindungsvorrichtung durch manuelles Verschwenken des Bedienhebels 22 im Uhrzeigersinn in die zweite Stellung verstellbar. Dabei schließt sich zunächst die durch den Bedienhebel 22 und das Übertragungselement 46 gebildete Kniehebelschere, d.h. der bei der Drehachse 50 vorhandene Öffnungswinkel des durch die Drehachsen 48, 50, 52 gebildeten Dreiecks wird verringert und die Kopplungselemente 18, 20 werden in Richtung der Pfeile 24 aufeinander zu bewegt, bis die Drehachsen 48, 50, 52 auf einer gemeinsamen Geraden liegen, welche im vorliegenden Ausführungsbeispiel parallel zu der Verschiebungsrichtung 24 der Kopplungselemente 18, 20 ist. Die Stellung, in der die Drehachsen 48, 50, 52 auf einer Geraden liegen, stellt eine Totpunktstellung der Vorrichtung dar, bei deren Überschreiten sich die Schwenkrichtung umkehrt, in die der Bedienhebel 22 gedrängt wird, wenn auf die Kopplungselemente 18, 20 ein äußeres Kräftepaar einwirkt, das die Kopplungselemente 18, 20 entgegen der Pfeile 24 in ihre weiter voneinander beabstandete Stellung drängt. Bei dem weiteren Verschwenken des Bedienhebels 22 im Uhrzeigersinn über den Totpunkt hinaus werden die Kopplungselemente 18, 20 geringfügig auseinander bewegt und die Kniehebelschere öffnet sich wieder bis auf einen Öffnungswinkel von etwas weniger als 10°.

Fig. 3 zeigt die Verbindungsvorrichtung in der zweiten Stellung, in der die Verbindungsvorrichtung geringfügig über den Totpunkt hinaus verstellt ist. Der Abstand d₂ zwischen den Kopplungselementen 18, 20 ist in dieser Stellung etwas größer als der minimale Abstand, der in der Totpunktstellung erreicht wird, ist aber aufgrund des geringeren Öffnungswinkels der Kniehebelschere deutlich geringer als in der in Fig. 2 gezeigten ersten Stellung.

Wenn die zwei Kopplungselemente 18, 20 in der in Fig. 3 gezeigten zweiten Stellung durch ein äußeres entgegen den Pfeilen 24 gerichtetes Kräftepaar auseinandergedrückt werden, werden der Bedienhebel 22 und das Übertragungselement 46 in die im Uhrzeigersinn orientierte Verschwenkrichtung gedrängt. Das Kopplungselement 18 bildet eine Anschlagfläche 42 für das Übertragungselement 46, welche ein solches Verschwenken blockiert, so dass ein Auseinanderbewegen der Kopplungselemente 18, 20 verhindert und die Vorrichtung in der zweiten Stellung arretiert wird. Die Verbindung kann somit nur durch handbetätigtes Verschwenken des Bedienhebels 22 gegen den Uhrzeigersinn durch einen Benutzer gelöst werden.

Die Verstellung über den Totpunkt hinaus in die zweite Stellung bewirkt ein geringfügiges Auseinanderbewegen der Kopplungselemente 18, 20. Um dennoch eine feste Verbindung mit einer hohen Klemmkraft zu ermöglichen, sind erfindungsgemäß zwei als Tellerfedern ausgebildete Federelemente 56, 58 vorgesehen, über die das Übertragungselement 46 mit dem Bedienhebel 22 gekoppelt ist. Das Übertragungselement 46 erstreckt sich durch eine in axialer Richtung des Übertragungselements 46 orientierte Öffnung eines Lagerelements 54 hindurch, welches um die Drehachse 50 drehbar und verschiebungsfest an dem Bedienhebel 22 gelagert ist, so dass das Übertragungselement 46 um die Drehachse 50 drehbar und in Richtung seiner Längsachse verschiebbar an dem Bedienhebel 22 gelagert ist.

Die Verschiebbarkeit des Übertragungselements 46 erlaubt ein Bewegen des Bedienhebels 22, ohne dass sich gleichzeitig die Kopplungselemente 18, 20 bewegen müssen, wenn diese z.B. bereits an den zu verbindenden Komponenten anschlagen. Eine solche Bewegung führt zu einer Druckbeaufschlagung der Tellerfedern 56, 58, welche zwischen dem Lagerelement 54 und einem mit dem Übertragungselement 46 verbundenen Einstellelement 60 eingespannt sind und deren elastische Rückstellkraft die Kopplungselemente 18, 20 zueinander hin drängt.

Die Kopplungselemente 18, 20 können somit bei dem Verstellen in die zweite Stellung bereits vor Erreichen des Totpunktes an den Flanschen der zu verbindenden Komponenten anschlagen, woraufhin ein weiteres Verstellen des Bedienhebels 22 gegen die elastische Rückstellkraft der Tellerfedern 56, 58 möglich ist und die Vorrichtung so in die zweite Stellung gebracht werden kann. Bei hergestellter vakuumdichter Verbindung sind die Tellerfedern 56, 58 federbelastet und bestimmen die durch die Kopplungselemente 18, 20 auf die Flansche ausgeübte Klemmkraft.

Um ein Einstellen dieser Klemmkraft zu ermöglichen, ist das Einstellelement 60 vorgesehen, welches einen Anschlag für die Tellerfeder 58 bildet und an dem Übertragungselement 46 in unterschiedlichen axialen Positionen festlegbar ist. Dadurch kann die Spannung der Tellerfedern 56, 58 und die durch die Vorrichtung in der zweiten Stellung hervorgerufene Klemmkraft eingestellt werden. Im vorliegenden Ausführungsbeispiel ist das Einstellelement 60 über eine Schraubverbindung mit dem Übertragungselement 46 verbunden, wodurch eine Verstellung der axialen Position des Einstellelements 60 relativ zu dem Übertragungselement 46 ermöglicht wird. Zur Arretierung des Einstellelements 60 in einer gewünschten Position ist ein Feststellelement 62 vorgesehen, welches mit dem Einstellelement 60 verschraubt und dadurch in axialer Richtung relativ zu dem Einstellelement 60 verstellbar ist. Das Feststellelement 62 bildet einen Anschlag für das Einstellelement 60 und das Übertragungselement 46 und arretiert das Einstellelement 60 in einer gewünschten axialen Position relativ zu dem Übertragungselement 46.

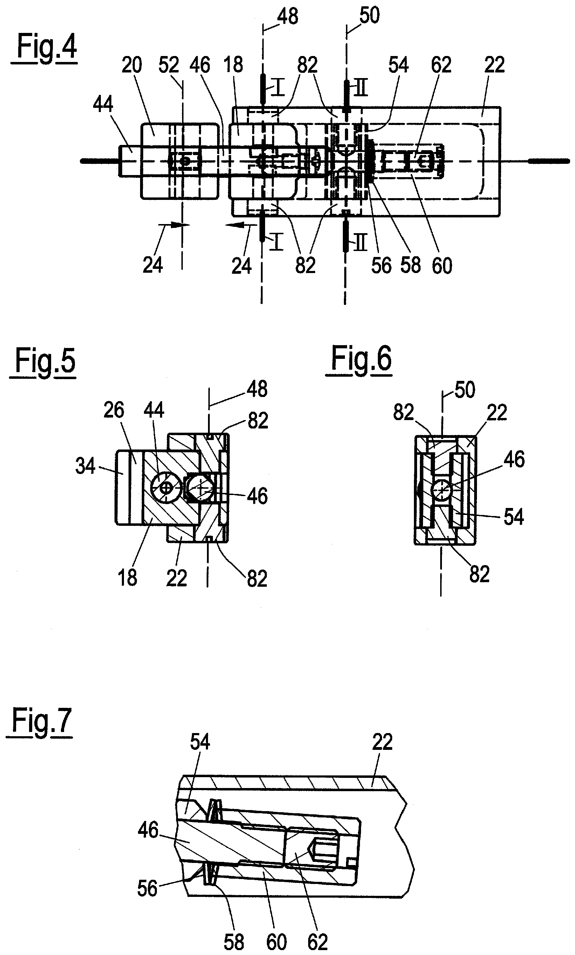

Fig. 4 zeigt die in Fig. 1 bis 3 gezeigte Verbindungsvorrichtung in der zweiten Stellung in einer teilweise transparenten Draufsicht. Fig. 5 und 6 zeigen die Verbindungsvorrichtung in einer entlang der in Fig. 4 gezeigten Linie I-I bzw. II-II geschnittenen und von dem Kopplungselement 20 aus gesehenen Darstellung. Zu erkennen sind insbesondere die durch Drehgelenke gebildeten reinen Drehverbindungen, welche die Kopplungselemente 18, 20 jeweils um die Drehachse 48 bzw. 52 drehbar und verschiebungsfest mit dem Bedienhebel 22 bzw. dem Übertragungselement 46 koppeln bzw. welche das Lagerelement 54, mit dem das Übertragungselement längsverschiebbar gekoppelt ist, um die Drehachse 50 drehbar und verschiebungsfest mit dem Bedienhebel 22 koppelt.

Die die Drehachsen 48 und 50 bildenden Drehgelenke umfassen jeweils zwei mit dem Bedienhebel 22 um die jeweilige Drehachse 48, 50 drehbar gekoppelte bolzenartige Elemente 82 (siehe auch Fig. 5 und 6), welche mit dem Kopplungselement 18 bzw. dem Lagerelement 54 fest verbunden und insbesondere verschraubt sind, wobei zur Sicherung der festen Verbindung die einander kontaktierenden Kontaktflächen der Elemente 82 einerseits und des Kopplungselements 18 bzw. des Lagerelements 54 andererseits vorzugsweise mit einem Kleber wie z.B. Loctite verklebt sind.

Fig. 7 zeigt den die Tellerfedern 56, 58 enthaltenden Ausschnitt A von Fig. 3 in vergrößerter Darstellung. Die von dem Übertragungselement 46 durchgriffenen Tellerfedern 56, 58 sind auf jeweils einer Seite nach innen gewölbt und liegen mit ihren nach innen gewölbten Seiten aneinander an, um die Federwirkung zu erzielen.

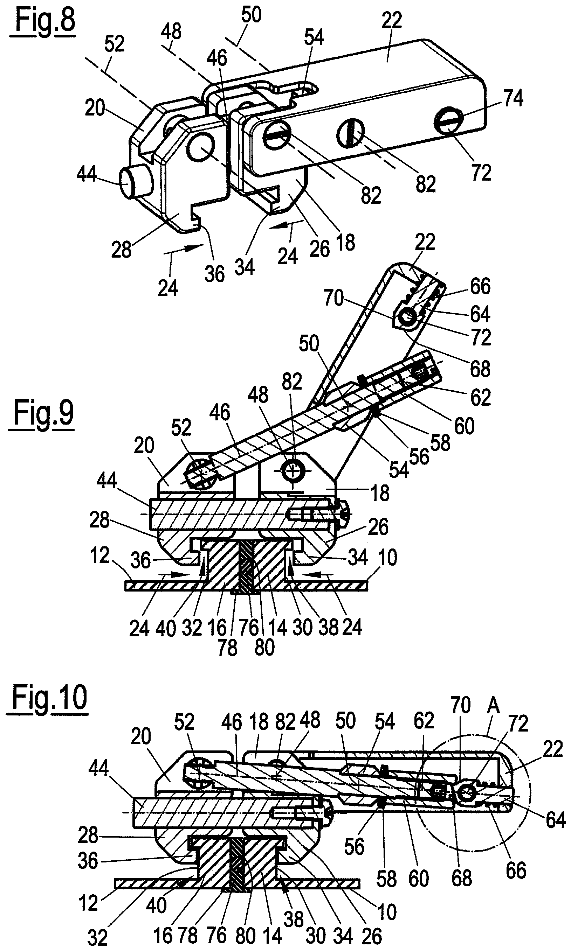

Fig. 8 bis 15 zeigen eine Verbindungsvorrichtung gemäß einer zweiten Ausführungsform der Erfindung, welche im Wesentlichen der in Fig. 1 bis 7 gezeigten Verbindungsvorrichtung entspricht, so dass im Nachfolgenden lediglich auf die Unterschiede zwischen den Verbindungsvorrichtungen eingegangen wird. Außerdem ist in Fig. 9 und 10 die Verwendung der Verbindungsvorrichtung in einer Vakuumanordnung mit zwei vakuumdicht zu verbindenden Komponenten 10, 12 gezeigt.

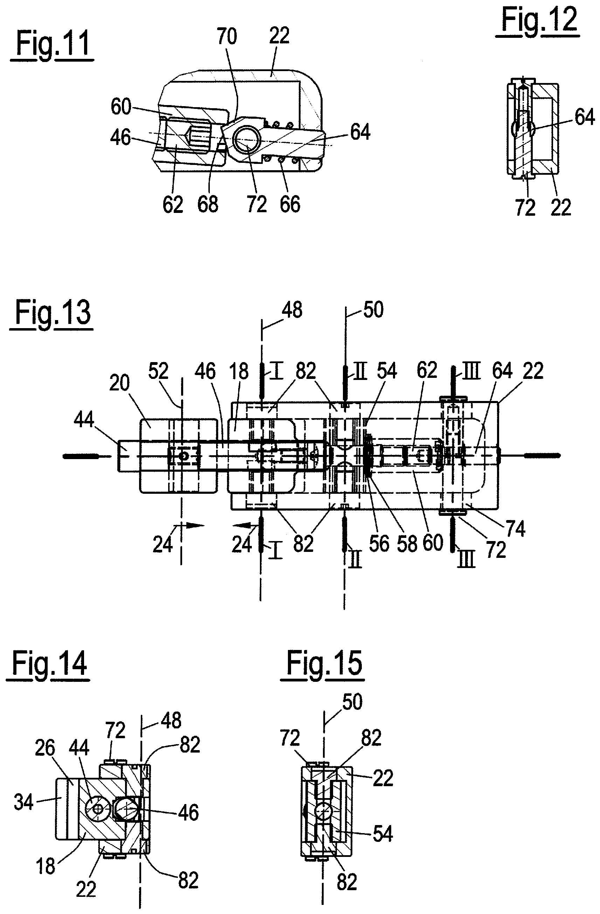

Die in Fig. 8 bis 15 gezeigte Verbindungsvorrichtung umfasst zusätzlich eine Sicherungseinrichtung, mit der die Verbindungsvorrichtung in der zweiten Stellung gegen unbeabsichtigtes Verschwenken des Bedienhebels 22 sicherbar ist. Die Sicherung umfasst ein stiftartiges Rastelement 64, welches in einer Richtung längsverschiebbar an dem Bedienhebel 22 verschiebbar gelagert ist, welche im Wesentlichen der Orientierung des Übertragungselement 46 in der zweiten Stellung entspricht, wie insbesondere in Fig. 10 und der vergrößerten Darstellung in Fig. 11 ersichtlich ist. Ein Federelement 66 drängt das Rastelement 64 in die in Fig. 9 bis 11 gezeigte Rastposition. Ein Betätigungselement 72 ist mit dem Rastelement 64 gekoppelt und erstreckt sich quer zu der Verschiebungsrichtung des Rastelements 64 und ist an seinen beiden äußeren Enden jeweils in einem Langloch 74 des Bedienhebels 22 verschiebbar gelagert und steht zur Betätigung durch einen Benutzer nach außen vor. Über das Betätigungselement 72 lässt sich das Rastelement 64 in eine Entrastposition zurückschieben, in der die Sicherung aufgehoben ist.

Bei dem Verschwenken des Bedienhebels 22 aus der in Fig. 9 gezeigten ersten Stellung in die in Fig. 10 gezeigte zweite Stellung läuft das Rastelement 64 mit einer Anlaufschräge 68 auf dem Einstellelement 60 auf und wird bei weiterem Verschwenken des Bedienhebels 22 entgegen der Rückstellkraft der Feder 66 zurück verschoben. Beim weiteren Verschwenken fährt das Rastelement 64 aufgrund der Rückstellkraft der Feder 66 in eine Ausnehmung des Einstellelements 60 ein und verrastet mit diesem. Das Rastelement 64 bildet dabei eine Hinterschneidung mit dem Einstellelement 60, welche in der Schwenkrichtung wirksam ist, die zurück zu der ersten Stellung führt, wodurch ein Verschwenken des Bedienhebels 22 in diese Richtung verhindert oder zumindest gehemmt wird.

Da die Hinterschneidung durch eine Anlaufschräge 70 des Rastelements 64 gebildet ist, die einen relativ flachen Neigungswinkel gegenüber der Verschiebungsrichtung des Rastelements 64 aufweist, ist ein Lösen der Verbindung durch alleiniges Zurückverschwenken des Bedienhebels 22 zwar prinzipiell möglich, jedoch nur mit deutlich erhöhtem Kraftaufwand, so dass eine Sicherung in der zweiten Stellung erreicht wird. Prinzipiell könnte die Sicherungseinrichtung auch so ausgebildet sein, dass ein Lösen der Verbindung durch alleiniges Verschwenken des Bedienhebels 22 überhaupt nicht möglich ist.

Ein unbeabsichtigtes Lösen der Verbindung wird somit verhindert oder zumindest erschwert. Zum beabsichtigten Lösen der Verbindung kann das Betätigungselement 72 der Sicherungseinrichtung zurückgezogen und das Rastelement 64 damit außer Eingriff mit dem Einstellelement 60 gebracht werden, so dass ein Zurückverschwenken des Bedienhebels 22 und somit ein Verbringen der Vorrichtung in die erste Stellung ungehindert möglich ist.

Fig. 9 und 10 veranschaulichen den Einsatz der Verbindungsvorrichtung zur Herstellung einer vakuumdichten Verbindung zwischen zwei Komponenten 10, 12. Die Komponenten 10, 12 stellen jeweils einen Rohrabschnitt dar und umfassen einen Klammerflansch 14, 16, der von dem Rohrabschnitt absteht und rotationssymmetrisch zu der Flanschlängsachse ist, welche senkrecht zu der Flanschebene ist und in Fig. 9 der Bildhorizontalen entspricht. Auf den Rückseiten 30, 32 der Flansche 14, 16 ist jeweils eine Ausnehmung 38, 40 ausgebildet, die parallel zur Flanschebene radial nach außen hin durch einen Vorsprung des Flansches 14, 16 begrenzt ist. Zwischen den einander zugewandten Stirnflächen der Flansche sind eine Dichtung 76 zur Herstellung einer vakuumdichten Verbindung und zwei Zentrierringe 78, 80 zur Zentrierung der Flansche angeordnet.

Wie in Fig. 10 gezeigt liegen die Kopplungselemente 18, 20 in der zweiten Stellung mit ihren Kopplungsabschnitten 26, 28 an den Rückseiten 30, 32 der Flansche 14, 16 an und klemmen diese zwischen sich derart ein, dass ringsum eine vakuumdichte Klemmverbindung zwischen den Flanschen 14, 16 geschaffen wird. Die Vorsprünge 34, 36 bilden mit den die Ausnehmungen 38, 40 begrenzenden Vorsprüngen der Flansche 14, 16 eine parallel zur Flanschebene in radialer Richtung nach außen hin wirksame Hinterschneidung, wodurch die Verbindungsvorrichtung zusätzlich fixiert ist.

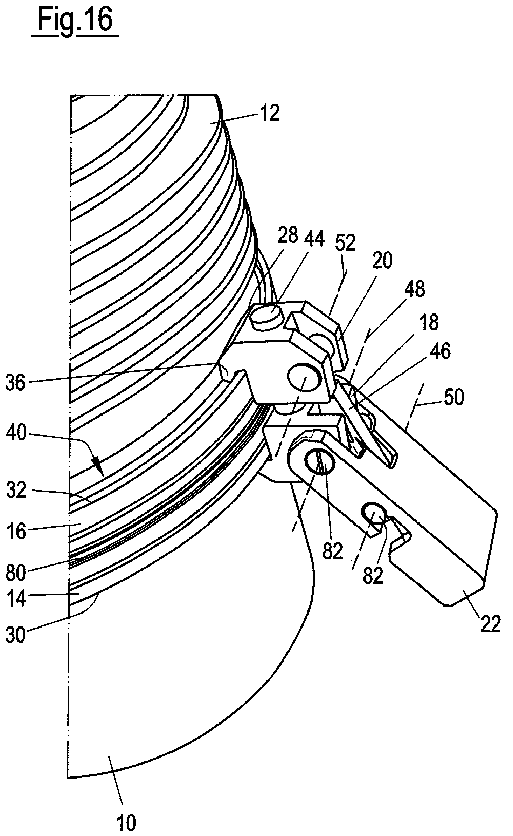

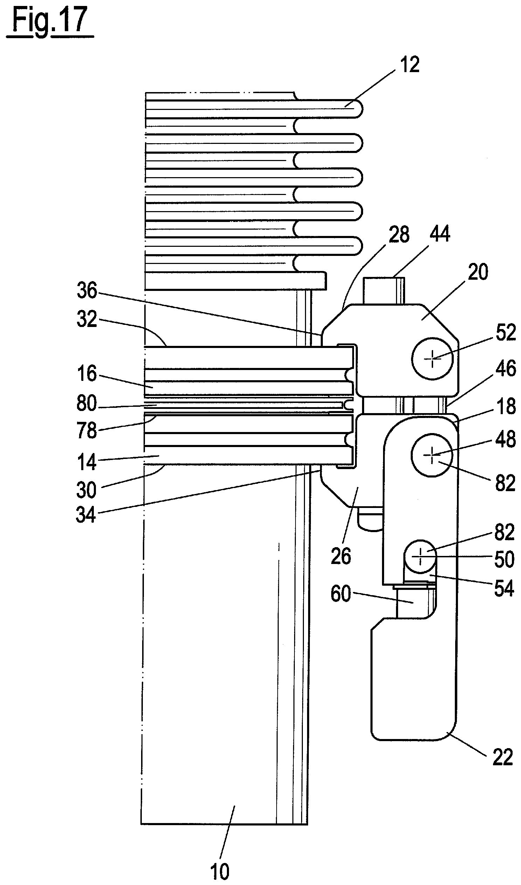

Fig. 16 und 17 zeigen eine weitere Vakuumanordnung, welche eine wie in Fig. 1 bis 7 gezeigte Verbindungsvorrichtung sowie eine durch einen Rohrabschnitt gebildete erste Komponente 10 und eine durch einen flexiblen Federbalg gebildete weitere Komponente 12 umfasst, welche mit der Verbindungsvorrichtung vakuumdicht verbunden sind. Wie in Fig. 16 gezeigt, erstreckt sich die Verbindungsvorrichtung nur über einen Teil des Umfangs der Flansche 14, 16. Zur Herstellung einer zuverlässigen vakuumdichten Verbindung über den gesamten Umfang der Flansche 14, 16 können über den Flanschumfang herum verteilt mehrere Verbindungsvorrichtungen der beschriebenen Art vorgesehen sein.

### Bezugszeichenliste

- 10, 12: Komponente
- 14, 16: Flansch
- 18, 20: Kopplungselement
- 22: Bedienhebel
- 24: Pfeil (Verschiebungsrichtung)
- 26, 28: Kopplungsabschnitt
- 30, 32: Rückseite
- 34, 36: Vorsprung
- 38, 40: Ausnehmung
- 42: Anschlagfläche
- 44: Führungselement
- 46: Übertragungselement
- 48, 50, 52: Drehachse
- 54: Lagerelement
- 56, 58: Tellerfeder
- 60: Einstellelement
- 62: Feststellelement
- 64: Rastelement
- 66: Federelement
- 68, 70: Anlaufschräge
- 72: Betätigungselement
- 74: Langloch
- 76: Dichtung
- 78, 80: Zentrierring
- 82: bolzenförmiges Element
- d₁, d₂: Abstand

## Patentansprüche

1. Vakuumanordnung mit wenigstens zwei Komponenten (10, 12), die jeweils einen Flansch (14, 16) aufweisen, und wenigstens einer Verbindungsvorrichtung zur Herstellung einer vakuumdichten Flanschverbindung zwischen den zwei Komponenten (10, 12),
wobei die Verbindungsvorrichtung ein erstes Kopplungselement (18) zur Kopplung mit der einen Komponente (10) und ein zweites Kopplungselement (20) zur Kopplung mit der anderen Komponente (12) umfasst,
wobei das erste Kopplungselement (18) und das zweite Kopplungselement (20) über einen schwenkbaren Bedienhebel (22) miteinander gekoppelt sind und die Verbindungsvorrichtung durch Verschwenken des Bedienhebels (22) aus einer ersten Stellung, in der die Kopplungselemente (18, 20) einen größeren Abstand (d₁) voneinander aufweisen, in eine zweite Stellung verstellbar ist, in der die beiden Kopplungselemente (18, 20) einen geringeren Abstand (d₂) voneinander aufweisen, und
wobei eine Führung für die zwei Kopplungselemente (18, 20) vorgesehen ist, mit der die Kopplungselemente (18, 20) entlang einer zumindest näherungsweise geradlinigen Bewegungsbahn relativ zueinander geführt sind, wobei die Führung einen Führungsabschnitt (44) aufweist, welcher zumindest teilweise in einer entlang der Bewegungsbahn verlaufenden Aussparung eines der Kopplungselemente (18, 20) angeordnet ist und welcher mit dem anderen Kopplungselement (18, 20) fest verbunden ist oder zumindest teilweise in einer Aussparung des anderen Kopplungselements (18, 20) angeordnet ist.

2. Vakuumanordnung nach Anspruch 1,
**dadurch gekennzeichnet, dass** das erste Kopplungselement (18) und das zweite Kopplungselement (20) durch Verschwenken des Bedienhebels (22) in einer Richtung (24) aufeinander zu bewegbar und/oder drängbar sind, die bei hergestellter vakuumdichter Verbindung quer und insbesondere im Wesentlichen senkrecht zu einer Kontaktfläche zumindest einer der beiden Komponenten (10, 12) ist, mit der die jeweilige Komponente (10, 12) dichtend an der anderen Komponente (10, 12) oder einem zwischen den Komponenten (10, 12) angeordneten Dichtungselement (76) anliegt.

3. Vakuumanordnung nach Anspruch 1 oder 2,
**dadurch gekennzeichnet, dass** das erste Kopplungselement (18) und/oder das zweite Kopplungselement (20) einen Kopplungsabschnitt (26, 28) aufweist, der zur Anlage an einer Rückseite (30, 32) eines Flansches (14, 16) einer Komponente (10, 12) und zur Ausübung einer quer und insbesondere senkrecht zu der Flanschebene der Komponente (10, 12) gerichteten Klemmkraft auf die Rückseite (30, 32) des Flansches (14, 16) der Komponente (10, 12) ausgebildet ist.

4. Vakuumanordnung nach einem der vorstehenden Ansprüche,
**dadurch gekennzeichnet, dass** das erste Kopplungselement (18) und/oder das zweite Kopplungselement

5. Vakuumanordnung nach einem der vorstehenden Ansprüche,
**dadurch gekennzeichnet, dass** die Verbindungsvorrichtung so ausgebildet ist, dass bei dem Verschwenken des Bedienhebels (22) zum Verbringen der Verbindungsvorrichtung aus der ersten Stellung in die zweite Stellung ein Totpunkt überschritten wird, bei dessen Überschreiten sich die Verschwenkrichtung umkehrt, in die der Bedienhebel (22) gedrängt wird, wenn auf die Kopplungselemente (18, 20) ein Kräftepaar einwirkt, das die Kopplungselemente (18, 20) in Richtung ihrer weiter voneinander beabstandeten Stellung drängt, wobei vorzugsweise ein Anschlag (42) vorgesehen ist, welcher in der zweiten Stellung der Verbindungsvorrichtung ein von dem Totpunkt weg gerichtetes Verschwenken des Bedienhebels (22) blockiert.

6. Vakuumanordnung nach einem der vorstehenden Ansprüche,
**dadurch gekennzeichnet, dass** ein Kniehebelspannmechanismus für die zwei Kopplungselemente (18, 20) vorgesehen ist, wobei der Kniehebelspannmechanismus den Bedienhebel (22) umfasst und mit dem Bedienhebel (22) betätigbar ist, um die Verbindungsvorrichtung von der ersten Stellung in die zweite Stellung zu verstellen.

7. Vakuumanordnung nach einem der vorstehenden Ansprüche,
**dadurch gekennzeichnet, dass** ein Übertragungselement (46) zur antriebswirksamen Kopplung des zweiten Kopplungselements (20) mit dem Bedienhebel (22) vorgesehen ist, welches mit dem Bedienhebel (22) drehbar gekoppelt ist und welches mit dem zweiten Kopplungselement (20), vorzugsweise drehbar, gekoppelt ist.

8. Vakuumanordnung nach Anspruch 7,
**dadurch gekennzeichnet, dass** das erste Kopplungselement (18) mit dem Bedienhebel (22) um eine erste Drehachse (48) drehbar gekoppelt ist und das Übertragungselement (46) um eine zweite Drehachse (50) drehbar mit dem Bedienhebel (22) und um eine dritte Drehachse (52) drehbar mit dem zweiten Kopplungselement (20) gekoppelt ist, wobei bevorzugt die erste Drehachse (48), die zweite Drehachse (50) und die dritte Drehachse (52) zumindest näherungsweise parallel zueinander sind.

9. Vakuumanordnung nach Anspruch 8,
**dadurch gekennzeichnet, dass** bei dem Verschwenken des Bedienhebels (22) zum Verstellen der Verbindungsvorrichtung aus der ersten Stellung in die zweite Stellung ein Totpunkt überschritten wird, an dem die erste Drehachse (48), die zweite Drehachse (50) und die dritte Drehachse (52) zumindest näherungsweise auf einer Geraden liegen, wobei die zweite Drehachse (50) vorzugsweise an einem Ende der Geraden angeordnet ist.

10. Vakuumanordnung nach einem der vorstehenden Ansprüche,
**dadurch gekennzeichnet, dass** zumindest ein elastisches Element (56, 58), insbesondere ein Federelement, vorgesehen ist, welches dazu ausgebildet ist, in der zweiten Stellung der Verbindungsvorrichtung einer Bewegung der Kopplungselemente (18, 20) in Richtung ihrer weiter voneinander beabstandeten Position durch eine elastische Rückstellkraft entgegen zu wirken.

11. Vakuumanordnung nach Anspruch 10,
**dadurch gekennzeichnet, dass** eine Einstellvorrichtung zur Einstellung einer elastischen Rückstellkraft vorgesehen ist, welche von dem elastischen Element (56, 58) in einer bestimmten Stellung der Verbindungsvorrichtung ausgeübt wird.

12. Vakuumanordnung nach einem der vorstehenden Ansprüche,
**dadurch gekennzeichnet, dass** eine Sicherungseinrichtung vorgesehen ist, welche in der zweiten Stellung aktivierbar ist, wobei die aktivierte Sicherungseinrichtung einem Verstellen der Verbindungsvorrichtung in die erste Stellung entgegen wirkt, wobei die Sicherungseinrichtung vorzugsweise ein Rastelement (64) umfasst, welches bei dem Verstellen der Verbindungsvorrichtung in die zweite Stellung einrastet, wobei insbesondere die Sicherungseinrichtung zwischen dem Bedienhebel (22) und einem den Bedienhebel (22) mit einem der Kopplungselemente (18, 20) antriebswirksam koppelnden Übertragungselement (46) wirksam ist.

13. Verwendung einer Verbindungsvorrichtung,
die ein erstes Kopplungselement (18) und ein zweites Kopplungselement (20) umfasst,
wobei das erste Kopplungselement (18) und das zweite Kopplungselement (20) über einen schwenkbaren Bedienhebel (22) miteinander gekoppelt sind und die Verbindungsvorrichtung durch Verschwenken des Bedienhebels (22) aus einer ersten Stellung, in der die Kopplungselemente (18, 20) einen größeren Abstand (d₁) voneinander aufweisen, in eine zweite Stellung verstellbar ist, in der die beiden Kopplungselemente (18, 20) einen geringeren Abstand (d₂) voneinander aufweisen, und
wobei eine Führung für die zwei Kopplungselemente (18, 20) vorgesehen ist, mit der die Kopplungselemente (18, 20) entlang einer zumindest näherungsweise geradlinigen Bewegungsbahn relativ zueinander geführt sind, wobei die Führung einen Führungsabschnitt (44) aufweist, welcher zumindest teilweise in einer entlang der Bewegungsbahn verlaufenden Aussparung eines der Kopplungselemente (18, 20) angeordnet ist und welcher mit dem anderen Kopplungselement (18, 20) fest verbunden ist oder zumindest teilweise in einer Aussparung des anderen Kopplungselements (18, 20) angeordnet ist,
zur Herstellung einer vakuumdichten Flanschverbindung zwischen wenigstens zwei Komponenten (10, 12) einer Vakuumanordnung, die jeweils einen Flansch (14, 16) aufweisen und mit denen die Kopplungselemente (18, 20) der Verbindungsvorrichtung gekoppelt werden.

## Claims

1. A vacuum arrangement having at least two components (10, 12) which each have a flange (14, 16) and having at least one connection apparatus for establishing a vacuum-tight flange connection between the two components (10, 12),
wherein the connection apparatus comprises a first coupling element (18) for coupling to the one component (10) and a second coupling element (20) for coupling to the other component (12);
wherein the first coupling element (18) and the second coupling element (20) are coupled to one another via a pivotable operating lever (22) and the connection apparatus can be adjusted by pivoting the operating lever (22) from a first position in which the coupling elements (18, 20) have a larger spacing (d₁) from one another into a second position in which the two coupling elements (18, 20) have a smaller spacing (d₂) from one another; and
wherein a guide for the two coupling elements (18, 20) is provided with which the coupling elements (18, 20) are guided relative to one another along an at least approximately straight-line movement path, with the guide having a guide section (44) which is arranged at least partly in a recess of one of the coupling elements (18, 20) extending along the movement path and which is fixedly connected to the other coupling element (18, 20) or is at least partly arranged in a recess of the other coupling element (18, 20).

2. A vacuum arrangement in accordance with claim 1,
**characterized in that**
the first coupling element (18) and the second coupling element (20) can be moved and/or urged toward one another by pivoting the operating lever (22) in a direction (24) which, with an established vacuum-tight connection, is transverse and in particular substantially perpendicular to a contact surface of at least one of the two components (10, 12) with which contact surface the respective component (10, 12) sealingly contacts the other component (10, 12) or a sealing element (76) arranged between the components (10, 12).

3. A vacuum arrangement in accordance with claim 1 or claim 2,
**characterized in that**
the first coupling element (18) and/or the second coupling element (20) has/have a coupling section (26, 28) which is configured for contact with a rear side (30, 32) of a flange (14, 16) of a component (10, 12) and for exerting a clamping force directed transversely and in particular perpendicular to the flange plane of the component (10, 12) onto the rear side (30, 32) of the flange (14, 16) of the component (10, 12).

4. A vacuum arrangement in accordance with any one of the preceding claims,
**characterized in that**
the first coupling element (18) and/or the second coupling element (20) has/have a projection (34, 36) which projects in the direction (24) in which the respective coupling element (18, 20) can be moved toward the other coupling element (18, 20) and which is configured for engaging into a cut-out (38, 40) of a component (10, 12) which is provided on the rear side (30, 32) of a flange (14, 16) of the respective component (10, 12) and which springs in transversely and in particular perpendicular to the flange plane of the flange (14, 16).

5. A vacuum arrangement in accordance with any one of the preceding claims,
**characterized in that**
the connection apparatus is configured such that, on the pivoting of the operating lever (22) for bringing the connection apparatus from the first position into the second position, a dead center is exceeded on whose exceeding the pivot direction reverses in which the operating lever (22) is urged when a force pair acts on the coupling elements (18, 20) which urges the coupling elements (18, 20) in the direction of their position spaced further apart from one another, with an abutment (42) preferably being provided which blocks a pivoting of the operating lever (22) directed away from the dead center in the second position of the connection apparatus.

6. A vacuum arrangement in accordance with any one of the preceding claims,
**characterized in that**
a toggle lever gripping mechanism is provided for the two coupling elements (18, 20), with the toggle lever gripping mechanism comprising the operating lever (22) and being able to be actuated by the operating lever (22) to adjust the connection apparatus from the first position into the second position.

7. A vacuum arrangement in accordance with any one of the preceding claims,
**characterized in that**
a transmission element (46) for the drive-effective coupling of the second coupling element (20) with the operating lever (22) is provided which is rotatably coupled to the operating lever (22) and which is coupled, preferably rotatably, to the second coupling element (20).

8. A vacuum arrangement in accordance with claim 7,
**characterized in that**
the first coupling element (18) is coupled to the operating lever (22) rotatable about a first axis of rotation (48) and the transmission element (46) is coupled to the operating lever (22) rotatable about a second axis of rotation (50) and is coupled to the second coupling element (20) rotatable about a third axis of rotation (52), with the first axis of rotation (48), the second axis of rotation (50) and the third axis of rotation (52) preferably being at least approximately parallel to one another.

9. A vacuum arrangement in accordance with claim 8,
**characterized in that**,
on the pivoting of the operating lever (22) for adjusting the connection apparatus from the first position into the second position, a dead center is exceeded at which the first axis of rotation (48), the second axis of rotation (50) and the third axis of rotation (52) lie at least approximately on a straight line, with the second axis of rotation (50) preferably being arranged at an end of the straight line.

10. A vacuum arrangement in accordance with any one of the preceding claims,
**characterized in that**
at least one elastic element (56, 58), in particular a spring element, is provided which is configured to counter a movement of the coupling elements (18, 20) in the direction of their position spaced further apart from one another by an elastic restoring force in the second position of the connection apparatus.

11. A vacuum arrangement in accordance with claim 10, **characterized in that**
a setting apparatus is provided for setting an elastic restoring force which is exerted by the elastic element (56, 58) in a specific position of the connection apparatus.

12. A vacuum arrangement in accordance with any one of the preceding claims,
**characterized in that**
a securing device is provided which can be activated in the second position, with the activated securing device counteracting an adjustment of the connection apparatus into the first position, with the securing device preferably comprising a latch element (64) which latches in on the adjustment of the connection apparatus into the second position, and with the securing device in particular being active between the operating lever (22) and a transmission element (46) coupling the operating lever (22) with one of the coupling elements (18, 20) in a drive-effective manner.

13. Use of a connection apparatus,
which comprises a first coupling element (18) and a second coupling element (20),
wherein the first coupling element (18) and the second coupling element (20) are coupled to one another via a pivotable operating lever (22) and the connection apparatus can be adjusted by pivoting the operating lever (22) from a first position in which the coupling elements (18, 20) have a larger spacing (d₁) from one another into a second position in which the two coupling elements (18, 20) have a smaller spacing (d₂) from one another; and
wherein a guide for the two coupling elements (18, 20) is provided with which the coupling elements (18, 20) are guided relative to one another along an at least approximately straight-line movement path, with the guide preferably having a guide section (44) which is arranged at least partly in a recess of one of the coupling elements (18, 20) extending along the movement path and which is fixedly connected to the other coupling element (18, 20) or is at least partly arranged in a recess of the other coupling element (18, 20),
for establishing a vacuum-tight flange connection between at least two components (10, 12) of a vacuum arrangement which each have a flange (14, 16) and to which the coupling elements (18, 20) of the connection apparatus are coupled.

## Revendications

1. Dispositif à vide comportant au moins deux composants (10, 12) qui présentent chacun une bride (14, 16), et au moins un dispositif d'assemblage pour réaliser un raccord à bride étanche au vide entre les deux composants (10, 12),
dans lequel le dispositif d'assemblage comporte un premier élément d'accouplement (18) pour réaliser l'accouplement avec ledit un composant (10) et un deuxième élément d'accouplement (20) pour réaliser l'accouplement avec ledit autre composant (12),
dans lequel le premier élément d'accouplement (18) et le deuxième élément d'accouplement (20) sont accouplés l'un à l'autre par un levier de manipulation (22) pivotant, et le dispositif d'assemblage peut être déplacé par pivotement du levier de manipulation (22) depuis une première position dans laquelle les éléments d'accouplement (18, 20) présentent un plus grand espacement (d₁) l'un par rapport à l'autre, jusque dans une deuxième position dans laquelle les deux éléments d'accouplement (18, 20) présentent un plus faible espacement (d₂) l'un par rapport à l'autre, et dans lequel un guidage est prévu pour les deux éléments d'accouplement (18, 20) avec lequel les éléments d'accouplement (18, 20) sont guidés l'un par rapport à l'autre le long d'une trajectoire au moins approximativement rectiligne, le guidage présentant un tronçon de guidage (44) qui est au moins partiellement agencé dans un renfoncement, s'étendant le long de la trajectoire, de l'un des éléments d'accouplement (18, 20) et qui est fermement relié à l'autre élément d'accouplement (18, 20) ou qui est au moins partiellement agencé dans un renfoncement de l'autre élément d'accouplement (18, 20).

2. Dispositif à vide selon la revendication 1, **caractérisé en ce que** le premier élément d'accouplement (18) et le deuxième élément d'accouplement (20) peuvent être déplacés et/ou poussés par pivotement du levier de manipulation (22) l'un vers l'autre dans une direction (24) qui, lorsque la liaison étanche au vide est établie, est transversale et en particulier sensiblement perpendiculaire à une surface de contact de l'un au moins des deux composants (10, 12) avec lequel le composant respectif (10, 12) est en appui étanche sur l'autre composant (10, 12) ou sur un élément d'étanchéité (76) agencé entre les composants (10, 12).

3. Dispositif à vide selon la revendication 1 ou 2, **caractérisé en ce que** le premier élément d'accouplement (18) et/ou le deuxième élément d'accouplement (20) présente un tronçon d'accouplement (26, 28) qui est réalisé pour venir en appui sur une face postérieure (30, 32) d'une bride (14, 16) d'un composant (10, 12) et pour exercer une force de serrage dirigée transversalement et en particulier perpendiculairement au plan de bride du composant (10, 12) sur la face postérieure (30, 32) de la bride (14, 16) du composant (10, 12).

4. Dispositif à vide selon l'une des revendications précédentes, **caractérisé en ce que** le premier élément d'accouplement (18) et/ou le deuxième élément d'accouplement (20) présente une saillie (34, 36) qui fait saillie dans la direction (24) dans laquelle l'élément d'accouplement (18, 20) respectif peut être déplacé vers l'autre élément d'accouplement (18, 20) et qui est réalisé pour s'engager dans un évidement (38, 40) d'un composant (10, 12) qui est prévu sur la face postérieure (30, 32) d'une bride (14, 16) du composant (10, 12) respectif et qui s'enclenche transversalement et en particulier perpendiculairement au plan de bride de la bride (14, 16).

5. Dispositif à vide selon l'une des revendications précédentes, **caractérisé en ce que** le dispositif d'assemblage est réalisé de telle sorte que lors du pivotement du levier de manipulation (22) pour amener le dispositif d'assemblage depuis la première position jusque dans la deuxième position un point mort est dépassé, lors du dépassement duquel s'inverse la direction de pivotement dans laquelle le levier de manipulation (22) est poussé si un couple de forces agit sur les éléments d'accouplement (18, 20), lequel pousse les éléments d'accouplement (18, 20) dans la direction de leur position dans laquelle ils sont plus espacée l'un de l'autre, et il est prévu de préférence une butée (42) qui, dans la deuxième position du dispositif d'assemblage, bloque un pivotement du levier de manipulation (22) dirigé en éloignement du point mort.

6. Dispositif à vide selon l'une des revendications précédentes, **caractérisé en ce qu'**il est prévu un mécanisme de serrage à genouillère pour les deux éléments d'accouplement (18, 20), le mécanisme de serrage à genouillère comprenant le levier de manipulation (22) et pouvant être actionné avec le levier de manipulation (22) pour déplacer le dispositif d'assemblage depuis la première position jusque dans la deuxième position.

7. Dispositif à vide selon l'une des revendications précédentes, **caractérisé en ce qu'**il est prévu un élément de transmission (46) pour l'accouplement par entraînement du deuxième élément d'accouplement (20) avec le levier de manipulation (22), lequel est accouplé en rotation avec le levier de manipulation (22) et lequel est accouplé au deuxième élément d'accouplement (20), de préférence par rotation.

8. Dispositif à vide selon la revendication 7, **caractérisé en ce que** le premier élément d'accouplement (18) est accouplé avec le levier de manipulation (22) en rotation autour d'un premier axe de rotation (48) et l'élément de transmission (46) est accouplé avec le levier de manipulation (22) en rotation autour d'un deuxième axe de rotation (50) et avec le deuxième élément d'accouplement (20) en rotation autour d'un troisième axe de rotation (52), le premier axe de rotation (48), le deuxième axe de rotation (50) et le troisième axe de rotation (52) étant de préférence approximativement parallèles les uns aux autres.

9. Dispositif à vide selon la revendication 8, **caractérisé en ce que** lors du pivotement du levier de manipulation (22) pour déplacer le dispositif d'assemblage depuis la première position jusque dans la deuxième position, est dépassé un point mort sur lequel le premier axe de rotation (48), le deuxième axe de rotation (50) et le troisième axe de rotation (52) se trouvent au moins approximativement sur une droite, le deuxième axe de rotation (50) étant agencé de préférence à une extrémité de la droite.

10. Dispositif à vide selon l'une des revendications précédentes, **caractérisé en ce qu'**il est prévu au moins un élément élastique (56, 58) en particulier un élément ressort qui est réalisé pour s'opposer par une force de rappel élastique, dans la deuxième position du dispositif d'assemblage, à un mouvement des éléments d'accouplement (18, 20) en direction de leur position espacée plus loin l'un de l'autre.

11. Dispositif à vide selon la revendication 10, **caractérisé en ce qu'**il est prévu un dispositif de réglage pour régler une force de rappel élastique qui est exercée par l'élément élastique (56, 58) dans une position déterminée du dispositif d'assemblage.

12. Dispositif à vide selon l'une des revendications précédentes, **caractérisé en ce qu'**il est prévu un dispositif de sécurité qui peut être activé dans la deuxième position, le dispositif de sécurité activé s'opposant à un déplacement du dispositif d'assemblage vers la première position, le dispositif de sécurité comprenant de préférence un élément d'enclenchement (64) qui s'enclenche lors du déplacement du dispositif d'assemblage dans la deuxième position, le dispositif de sécurité étant actif en particulier entre le levier de manipulation (22) et un élément de transmission (46) accouplant par entraînement le levier de manipulation (22) avec un des éléments d'accouplement (18, 20).

13. Utilisation d'un dispositif d'assemblage
qui comprend un premier élément d'accouplement (18) et un deuxième élément d'accouplement (20),
le premier élément d'accouplement (18) et le deuxième élément d'accouplement (20) étant accouplés l'un à l'autre via un levier de manipulation (22) pivotant et le dispositif d'assemblage pouvant être déplacé depuis une première position, dans laquelle les éléments d'accouplement (18, 20) présentent un plus grand espacement (d₁) l'un par rapport à l'autre, jusque dans une deuxième position, dans laquelle les deux éléments d'accouplement (18, 20) présentent un plus faible espacement (d₂) l'un par rapport à l'autre, et
un guidage étant prévu pour les deux éléments d'accouplement (18. 20), avec lequel les éléments d'accouplement (18. 20) sont guidés l'un par rapport à l'autre le long d'une trajectoire au moins approximativement rectiligne, le guidage présentant un tronçon de guidage (44) qui est agencé au moins partiellement dans un renfoncement de l'un des éléments d'accouplement (18. 20), lequel s'étend le long de la trajectoire, et qui est fermement relié à l'autre élément d'accouplement (18. 20) ou agencé au moins partiellement dans un renfoncement de l'autre élément d'accouplement (18. 20),
pour réaliser un assemblage de brides étanche au vide entre au moins deux composants (10, 12) d'un dispositif à vide qui présentent chacun une bride (14, 16) et avec lesquels les éléments d'accouplement (18. 20) du dispositif d'assemblage sont accouplés.
